# EUROPEAN PATENT APPLICATION

(11) **EP 4 835 183 A1**
(43) Date of publication of application: **04.11.2026**
(21) Application number: 24912734.1
(22) Date of filing: 23.12.2024
(51) Int. Cl.: D05B 19/02

(54) **SEWING MANAGEMENT SYSTEM AND SEWING MANAGEMENT METHOD**

(30) Priority: 28.12.2023 JP 2023222432
(71) Applicant: JUKI Corporation, Tama-shi, Tokyo 206-8551 (JP)
(72) Inventor: ATSUMI Tadashi, Tama-shi, Tokyo 206-8551 (JP)
(74) Representative: Hoeger, Stellrecht & Partner Patentanwälte mbB
(86) International application number: PCT/JP2024/045486
(87) International publication number: WO 2025/142847

(57) **Abstract**

A sewing management system (1) includes a data acquisition unit (61) configured to acquire operating data of a sewing machine (2), a processing unit (62) configured to calculate energy consumption of the sewing machine (2) based on the operating data, and an output unit (63) configured to cause an output device to output the energy consumption.

## Description

### TECHNICAL FIELD

The technique disclosed in the present specification relates to a sewing management system and a sewing management method.

### BACKGROUND ART

In the technical field related to sewing management systems, a sewing management system as disclosed in Patent Literature 1 is known.

### CITATION LIST

### PATENT LITERATURE

Patent Literature 1: JP2020-168056A

### SUMMARY OF INVENTION

### TECHNICAL PROBLEM

A sewing machine operates based on electric power. When managing energy consumption of the sewing machine, it is conceivable to install a power sensor in the sewing machine. However, in a case of managing energy consumption of a large number of industrial sewing machines present in a sewing factory, when power sensors are installed in all the industrial sewing machines, installation costs of the power sensors increase.

An object of the technique disclosed in the present specification is to manage energy consumption of a sewing machine.

### SOLUTION TO PROBLEM

The present specification discloses a sewing management system. The sewing management system includes a data acquisition unit configured to acquire operating data of a sewing machine; a processing unit configured to calculate energy consumption of the sewing machine based on the operating data; and an output unit configured to cause an output device to output the energy consumption.

### ADVANTAGEOUS EFFECTS OF INVENTION

According to the technique disclosed in the present specification, the energy consumption of the sewing machine can be managed.

### BRIEF DESCRIPTION OF DRAWINGS

[Fig. 1] Fig. 1 is a diagram schematically showing a sewing management system according to an embodiment.
[Fig. 2] Fig. 2 is a hardware configuration diagram showing a management controller according to the embodiment.
[Fig. 3] Fig. 3 is a functional block diagram showing a management device and a sewing machine according to the embodiment.
[Fig. 4] Fig. 4 is a flowchart showing a sewing management method according to the embodiment.
[Fig. 5] Fig. 5 is a diagram showing an example of display data displayed on a display device according to the embodiment.
[Fig. 6] Fig. 6 is a diagram showing an example of display data displayed on the display device according to the embodiment.
[Fig. 7] Fig. 7 is a diagram illustrating processing of an output unit according to the embodiment.

### DESCRIPTION OF EMBODIMENTS

Hereinafter, an embodiment according to the present technique will be described with reference to the drawings, but the present technique is not limited to the embodiment. The components of the embodiment described below can be appropriately combined. A part of the components may not be used.

### [Sewing Management System]

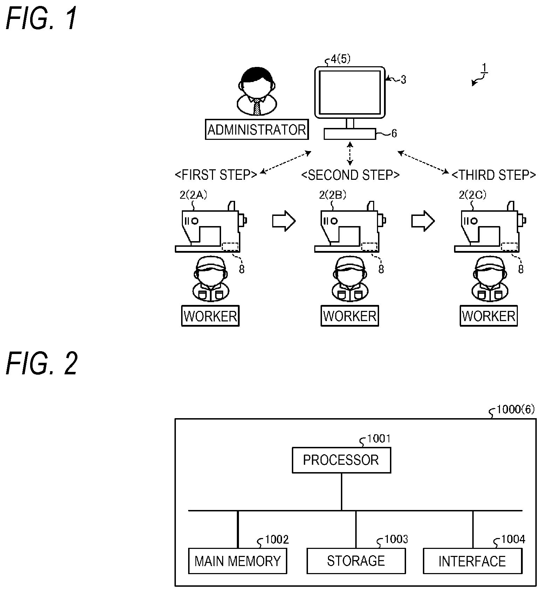

Fig. 1 is a diagram schematically showing a sewing management system 1 according to an embodiment. The sewing management system 1 includes a management device 3 that manages a production process of a sewn product. The production process includes sewing steps of sewing a sewing target using sewing machines 2. Each of the sewing machines 2 is an industrial sewing machine. The sewn product is produced in a production line including the sewing machines 2. A plurality of sewing machines 2 are installed in the production line. The production line is installed in a sewing factory. The sewing machines 2 operate in the sewing factory. The sewing target is sewn by the sewing machines 2 to produce the sewn product. In the embodiment, the management device 3 is installed in the sewing factory. The management device 3 may be installed outside the sewing factory.

In the sewing steps, the sewing target is sewn by the sewing machines 2 to produce the sewn product. Examples of the sewing target include fabric. Examples of the sewn product include clothes.

In the sewing factory, a plurality of types of sewing machines 2 corresponding to applications are installed. In the sewing factory, a plurality of types of sewing machines 2 are installed to correspond to a plurality of sewing steps for producing the sewn product. Examples of the type of the sewing machine 2 include a lockstitch sewing machine for sewing a body part, a button sewing machine for attaching a button to the body part, and a pocket sewing machine for attaching a pocket to the body part. In one sewing factory, many sewing machines 2 of various types are installed. In order to simplify the description, three sewing machines 2 are shown in Fig. 1. A first sewing machine 2A is used in a first step for producing the sewn product. A second sewing machine 2B is used in a second step for producing the sewn product. A third sewing machine 2C is used in a third step for producing the sewn product. In the sewing factory, a plurality of sewing machines 2 of one type may be installed.

In a sewing factory, an administrator and workers work. The administrator manages the workers and the sewing machines 2. The workers sew the sewing target using the sewing machines 2 in the sewing steps. Each of the administrator and the workers may be regarded as a user of the sewing machine 2. The number of administrators may be one or may be multiple. The number of workers may be multiple or may be one. For example, one worker may operate a plurality of sewing machines 2.

The management device 3 includes a display device 4, an input device 5, and a management controller 6. The display device 4 displays display data. The display device 4 includes a flat panel display, such as a liquid crystal display or an organic EL display. The input device 5 is operated by the administrator to generate input data. The input device 5 may be operated by the worker. The input device 5 includes a touch panel (touch sensor) disposed on a display screen of the display device 4. The input device 5 may be a computer keyboard, a mouse, or a voice input device. The management controller 6 includes a computer system. The management controller 6 includes at least one processor and a main memory that stores a computer program executable by the processor.

Each of the sewing machines 2 includes a sewing machine controller 8. The sewing machine controller 8 includes a computer system. The sewing machine controller 8 includes at least one processor and a main memory that stores a computer program executable by the processor.

The management device 3 is shared by the plurality of sewing machines 2 in the sewing factory. The number of management devices 3 is less than the number of sewing machines 2. The management device 3 can communicate with the sewing machine. The management controller 6 of the management device 3 communicates with the sewing machine controller 8 of each of the sewing machines 2. The management controller 6 and the sewing machine controller 8 wirelessly communicate with each other. The management controller 6 and the sewing machine controller 8 wirelessly communicate with each other via a local area network (LAN). Examples of the wireless LAN include Wi-Fi (registered trademark). The management controller 6 and the sewing machine controller 8 may wirelessly communicate with each other via a personal area network (PAN). Examples of the wireless PAN include Bluetooth (registered trademark).

The management controller 6 transmits a control command to the sewing machine controller 8 of the sewing machine 2 based on the input data generated by operating the input device 5.

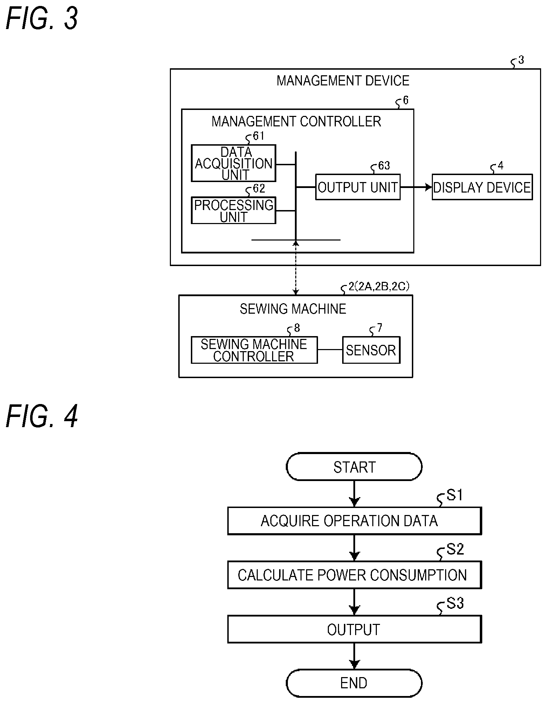

The sewing machine controller 8 transmits operating data of the sewing machine 2 to the management controller 6. The operating data of the sewing machine 2 includes operating conditions of the sewing machine 2. The operating conditions of the sewing machine 2 include the number of stitches, a seam length, a seam pitch, a seam pattern, a feed speed of a material to be sewn, a thread tension, and a pressing pressure on the sewing target. The sewing machine controller 8 monitors the operating conditions of the sewing machine 2. The sewing machine 2 is provided with a sensor 7 (with reference to Fig. 3) that detects each of the operating conditions of the sewing machine 2. Examples of the sensor 7 include a number-of-stitches sensor that detects the number of stitches, a tension sensor that detects the thread tension, and a pressing pressure sensor that detects the pressing pressure on the sewing target. The sewing machine controller 8 can monitor the operating conditions of the sewing machine 2 by acquiring detection data of the sensor 7.

Further, the sewing machine 2 includes a sewing machine motor for operating a needle bar and a thread take-up lever. The operating data of the sewing machine 2 includes operating conditions of the sewing machine motor. The sewing machine controller 8 inputs a control command to a sewing machine drive circuit that drives the sewing machine motor. The sewing machine drive circuit includes a switch element such as a field effect transistor (FET). The operating data of the sewing machine 2 includes the control command transmitted from the sewing machine controller 8 to the sewing machine drive circuit. The control command includes at least one of a rotation speed command value for commanding a rotation speed of the sewing machine motor or a current command value for commanding a current value to be input to the sewing machine motor. The sewing machine motor rotates at a rotation speed determined based on the rotation speed command value. The rotation speed command value may be an average rotation speed command value during operation of the sewing machine motor or a maximum rotation speed command value. The rotation speed of the sewing machine motor may be an average rotation speed during operation of the sewing machine motor or may be a maximum rotation speed. A current value determined based on the current command value is input to the sewing machine motor.

The management controller 6 collects the operating data of each of the plurality of sewing machines 2. The management controller 6 displays, on the display device 4, the operating data of each of the plurality of sewing machines 2.

### [Computer System]

Fig. 2 is a hardware configuration diagram showing the management controller 6 according to the embodiment. The management controller 6 includes a computer system 1000. The computer system 1000 includes a processor 1001 such as a central processing unit (CPU), a main memory 1002 including a nonvolatile memory such as a read only memory (ROM) and a volatile memory such as a random access memory (RAM), a storage 1003, and an interface 1004 including an input/output circuit. A function of the management controller 6 is stored in the storage 1003 as a computer program. The processor 1001 reads the computer program from the storage 1003, loads the computer program into the main memory 1002, and executes processing according to the computer program. The computer program may be distributed to the computer system 1000 via a network.

Similarly, the sewing machine controller 8 includes a computer system including a processor, a main memory, a storage, and an interface.

### [Management Device and Sewing Machine]

Fig. 3 is a functional block diagram showing the management device 3 and the sewing machine 2 according to the embodiment. As shown in Fig. 3, each of the plurality of sewing machines 2 includes the sewing machine controller 8 and the sensor 7. As described above, the sensor 7 detects the operating conditions of the sewing machine 2.

The management controller 6 includes a data acquisition unit 61, a processing unit 62, and an output unit 63.

The data acquisition unit 61 acquires the operating data of the sewing machine 2. The data acquisition unit 61 acquires the operating data from each of the plurality of sewing machines 2 (2A, 2B, 2C).

The processing unit 62 calculates energy consumption of the sewing machine 2 based on the operating data of the sewing machine 2 acquired by the data acquisition unit 61. The processing unit 62 calculates energy consumption of each of the plurality of sewing machines 2 (2A, 2B, 2C).

The processing unit 62 stores correlation data indicating a relationship between the operating data and the energy consumption. The correlation data is obtained in advance by a preliminary experiment or a simulation. The processing unit 62 can calculate the energy consumption of the sewing machine 2 based on the operating data of the sewing machine 2 acquired by the data acquisition unit 61 and the correlation data.

As described above, the operating data of the sewing machine 2 includes the control command transmitted from the sewing machine controller 8 to the sewing machine drive circuit. The control command includes at least one of the rotation speed command value for commanding the rotation speed of the sewing machine motor or the current command value for commanding the current value to be input to the sewing machine motor.

When the operating data is the rotation speed command value of the sewing machine motor, the correlation data indicates a relationship between the rotation speed command value of the sewing machine motor and the energy consumption. The higher the rotation speed command value is, the larger the energy consumption is. The lower the rotation speed command value is, the smaller the energy consumption is. The processing unit 62 can calculate the energy consumption of the sewing machine 2 based on the rotation speed command value of the sewing machine motor acquired by the data acquisition unit 61 and the correlation data.

When the operating data is the current command value of the sewing machine motor, the correlation data indicates a relationship between the current command value of the sewing machine motor and the energy consumption. The higher the current command value is, the larger the energy consumption is. The lower the current command value is, the smaller the energy consumption is. The processing unit 62 can calculate the energy consumption of the sewing machine 2 based on the current command value of the sewing machine motor acquired by the data acquisition unit 61 and the correlation data.

The operating data may be the number of stitches of the sewing machine 2. The number of stitches refers to the number of times a sewing needle (needle bar) reciprocates in an upper-lower direction by the sewing machine motor. The above sensor 7 includes the number-of-stitches sensor that detects the number of stitches. The correlation data indicates a relationship between the number of stitches and the energy consumption. The larger the number of stitches is, the larger the energy consumption is. The smaller the number of stitches is, the smaller the energy consumption is. The processing unit 62 can calculate the energy consumption of the sewing machine 2 based on the number of stitches acquired by the data acquisition unit 61 and the correlation data.

The operating data may include an operation time of the sewing machine motor. The processing unit 62 can calculate an energy consumption amount of the sewing machine 2 based on the energy consumption calculated according to the above-described example and the operation time of the sewing machine motor.

The output unit 63 displays, on a display device 13, the energy consumption calculated by the processing unit 62. The display device 13 is an example of an output device that outputs the energy consumption calculated by the processing unit 62.

### [Sewing Management Method]

Fig. 4 is a flowchart showing a sewing management method according to the embodiment. The data acquisition unit 61 acquires the operating data of the sewing machine 2 from the sewing machine controller 8 (step S1).

The processing unit 62 calculates the energy consumption of the sewing machine 2 based on the operating data of the sewing machine 2 acquired in step S1 and the correlation data obtained in advance (step S2).

The output unit 63 displays, on the display device 4, the energy consumption of the sewing machine 2 calculated in step S2 (step S3).

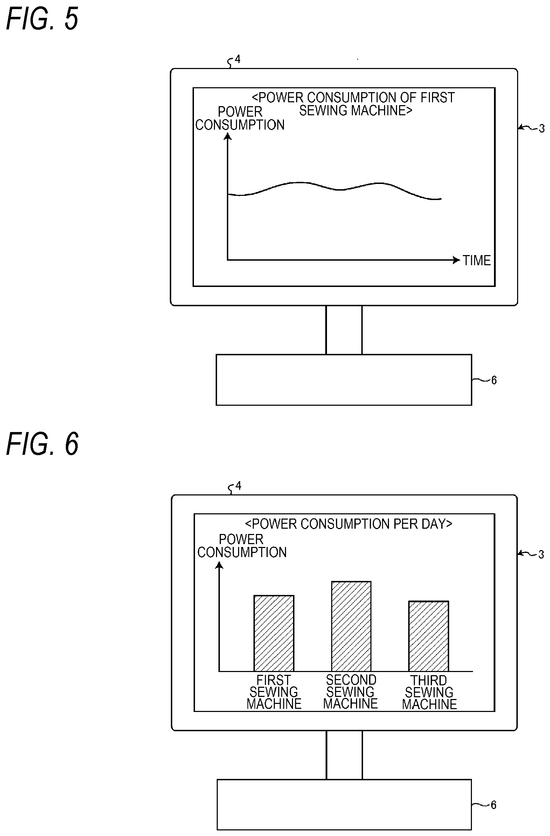

Fig. 5 is a diagram showing an example of the display data displayed on the display device 4 according to the embodiment. As shown in Fig. 5, the output unit 63 can display the energy consumption of one of the sewing machines 2 on the display device 4. In the example shown in Fig. 5, energy consumption of the first sewing machine 2A is displayed on the display device 4. As shown in Fig. 5, the output unit 63 may display, on the display device 4, a graph indicating a relationship between an elapsed time from when the operation of the sewing machine 2 is started and the energy consumption.

Fig. 6 is a diagram showing an example of the display data displayed on the display device 4 according to the embodiment. As shown in Fig. 6, the output unit 63 can simultaneously display the energy consumption of the plurality of sewing machines 2 on the display device 4. In the example shown in Fig. 6, energy consumption (energy consumption amount) per day of each of the first sewing machine 2A, the second sewing machine 2B, and the third sewing machine 2C is displayed on the display device 4. As shown in Fig. 6, the output unit 63 may display, on the display device 4, a graph indicating the energy consumption (energy consumption amount) per day of each of the first sewing machine 2A, the second sewing machine 2B, and the third sewing machine 2C.

### [Abnormality Detection]

The processing unit 62 can determine whether the sewing machine 2 is abnormal based on the calculated energy consumption of the sewing machine 2. When the calculated energy consumption changes rapidly, the processing unit 62 can determine that an abnormality occurs in the sewing machine motor or a motor drive circuit. When the calculated energy consumption rapidly increases or decreases, the processing unit 62 can determine that an abnormality occurs in the sewing machine motor or the motor drive circuit. A rapid change in the energy consumption means that an amount of change (rate of change) in the energy consumption per unit time is equal to or greater than a threshold determined in advance. When a rate of change in the calculated energy consumption is equal to or greater than the threshold determined in advance, the processing unit 62 determines that an abnormality occurs in the sewing machine motor or the motor drive circuit.

When the processing unit 62 determines that the sewing machine 2 is abnormal, the output unit 63 displays, on the display device 13, information indicating that the sewing machine 2 is abnormal. Thus, the administrator can recognize the abnormality of the sewing machine 2 at an early stage. The output unit 63 may display, on the display device 13, that there is a sign of abnormality in the sewing machine 2.

When it is determined by the processing unit 62 that the sewing machine 2 is abnormal, the output unit 63 may cause an information terminal to output information indicating that the sewing machine 2 is abnormal.

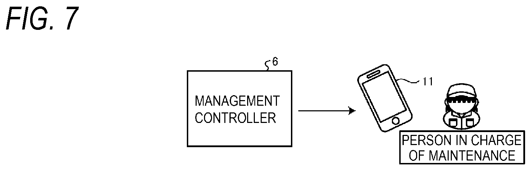

Fig. 7 is a diagram illustrating the processing of the output unit 63 according to the embodiment. As shown in Fig. 7, when it is determined by the processing unit 62 that the sewing machine 2 is abnormal, the output unit 63 may cause, for example, an information terminal 11 possessed by a person in charge of maintenance of the sewing machine 2 to output information indicating that the sewing machine 2 is abnormal. Thus, the person in charge of maintenance can recognize the abnormality of the sewing machine 2 at an early stage, and can maintain the sewing machine 2 at an early stage. The output unit 63 may cause the information terminal 11 to output that there is a sign of abnormality in the sewing machine 2.

When a vibration sensor that detects vibration of the sewing machine 2 is provided in the sewing machine 2 as the sensor 7, the processing unit 62 may determine whether the sewing machine 2 is abnormal based on a detection value of the vibration sensor. When the detection value of the vibration sensor rapidly increases, the processing unit 62 can determine that an abnormality occurs in at least a part of the sewing machine 2. The output unit 63 may cause the display device 13 or the information terminal 11 to output information indicating that the sewing machine 2 is abnormal or that there is a sign of abnormality in the sewing machine 2.

When a temperature sensor that detects a temperature of the sewing machine 2 is provided in the sewing machine 2 as the sensor 7, the processing unit 62 may determine whether the sewing machine 2 is abnormal based on a detection value of the temperature sensor. When the detection value of the temperature sensor rapidly increases, the processing unit 62 can determine that an abnormality occurs in at least a part of the sewing machine 2. The output unit 63 may cause the display device 13 or the information terminal 11 to output information indicating that the sewing machine 2 is abnormal or that there is a sign of abnormality in the sewing machine 2.

### [Advantageous Effects]

As described above, in the embodiment, the sewing management system 1 includes the data acquisition unit 61 configured to acquire the operating data of the sewing machine 2; the processing unit 62 configured to calculate the energy consumption of the sewing machine 2 based on the operating data; and the output unit 63 configured to cause the display device 13, which is an output device, to output the energy consumption.

According to the embodiment, the energy consumption of the sewing machine 2 is calculated based on the operating data of the sewing machine 2. Thus, the energy consumption of the sewing machine 2 is managed. The energy consumption of the sewing machine 2 can be managed even if no power sensor is installed in the sewing machine 2.

The correlation data indicating the relationship between the operating data and the energy consumption of the sewing machine 2 is obtained in advance. Thus, the processing unit 62 can calculate the energy consumption of the sewing machine 2 based on the operating data acquired by the data acquisition unit 61 and the correlation data.

The operating data of the sewing machine 2 includes at least one of the rotation speed command value of the sewing machine motor or the current command value of the sewing machine motor. Even if no power sensor is installed in the sewing machine, the energy consumption of the sewing machine 2 is calculated based on the control command output from the sewing machine controller 8 to the sewing machine drive circuit.

The processing unit 62 can determine whether the sewing machine 2 is abnormal based on the energy consumption of the sewing machine 2. The output unit 63 causes the display device 13 or the information terminal 11 to output information indicating that the sewing machine is abnormal. Thus, the administrator or the person in charge of maintenance can recognize the abnormality of the sewing machine 2 at an early stage.

The present disclosure includes the following aspects.
(1) A sewing management system including:
   a data acquisition unit configured to acquire operating data of a sewing machine;
   a processing unit configured to calculate energy consumption of the sewing machine based on the operating data; and
   an output unit configured to cause an output device to output the energy consumption.
(2) The sewing management system according to (1), in which
   correlation data indicating a relationship between the operating data and the energy consumption is obtained in advance, and
   the processing unit calculates the energy consumption based on the operating data acquired by the data acquisition unit and the correlation data.
(3) The sewing management system according to (1), in which
   the operating data includes at least one of a rotation speed command value of a sewing machine motor or a current command value of the sewing machine motor.
(4) The sewing management system according to (1), in which
   the processing unit determines whether the sewing machine is abnormal based on the energy consumption, and
   the output unit outputs information indicating that the sewing machine is abnormal.
(5) The sewing management system according to (4), in which
   the processing unit determines that an abnormality occurs in a sewing machine motor or a motor drive circuit when the energy consumption rapidly changes.
(6) The sewing management system according to (4), in which
   when it is determined by the processing unit that the sewing machine is abnormal, the output unit displays, on a display device, information indicating that the sewing machine is abnormal.
(7) The sewing management system according to (4), in which
   when it is determined by the processing unit that the sewing machine is abnormal, the output unit causes an information terminal of a person in charge of maintenance to output information indicating that the sewing machine is abnormal.
(8) A sewing management method including:
   acquiring operating data of a sewing machine;
   calculating energy consumption of the sewing machine based on the operating data; and
   causing an output device to output the energy consumption.

The present application is based on Japanese Patent Application No. 2023-222432 filed on December 28, 2023, the contents of which are incorporated herein by reference.

## Claims

1. A sewing management system comprising:
a data acquisition unit configured to acquire operating data of a sewing machine;
a processing unit configured to calculate energy consumption of the sewing machine based on the operating data; and
an output unit configured to cause an output device to output the energy consumption.

2. The sewing management system according to claim 1, wherein
correlation data indicating a relationship between the operating data and the energy consumption is obtained in advance, and
the processing unit calculates the energy consumption based on the operating data acquired by the data acquisition unit and the correlation data.

3. The sewing management system according to claim 1, wherein
the operating data includes at least one of a rotation speed command value of a sewing machine motor or a current command value of the sewing machine motor.

4. The sewing management system according to claim 1, wherein
the processing unit determines whether the sewing machine is abnormal based on the energy consumption, and
the output unit outputs information indicating that the sewing machine is abnormal.

5. The sewing management system according to claim 4, wherein
the processing unit determines that an abnormality occurs in a sewing machine motor or a motor drive circuit when the energy consumption rapidly changes.

6. The sewing management system according to claim 4, wherein
when it is determined by the processing unit that the sewing machine is abnormal, the output unit displays, on a display device, information indicating that the sewing machine is abnormal.

7. The sewing management system according to claim 4, wherein
when it is determined by the processing unit that the sewing machine is abnormal, the output unit causes an information terminal of a person in charge of maintenance to output information indicating that the sewing machine is abnormal.

8. A sewing management method comprising:
acquiring operating data of a sewing machine;
calculating energy consumption of the sewing machine based on the operating data; and
causing an output device to output the energy consumption.
